# EUROPEAN PATENT APPLICATION

(11) **EP 4 752 172 A1**
(43) Date of publication of application: **03.06.2026**
(21) Application number: 24216895.3
(22) Date of filing: 02.12.2024
(51) Int. Cl.: C08J 9/14, C08J 9/30

(54) **FOAM FORMING COMPOSITION AND JOINT**

(71) Applicant: Tremco CPG Netherlands B.V., 4241 WC Arkel (NL)
(72) Inventor: LANSBERGEN, Adrianus Jozephus Hendricus, 6862 WV Oosterbeek (NL); TERPSTRA, Marjolein Elisabeth Johanna, 3581 MR Utrecht (NL); VAN DEN BROEK, Bernardus Aloysius, 5018 EW Tilburg (NL); SCHOOTSTRA, Siebe, 4208 DC Gorinchem (NL); VAN HERPEN, Goselinus Jan, 3371 CX Hardinxveld-Giessendam (NL)
(74) Representative: Lippert Stachow Patentanwälte Rechtsanwälte

(57) **Abstract**

The invention is directed to a foam forming composition comprising a part A and a part B, a catalyst for reacting part A and part B with one another and a propellant, the part A consisting of one or more multifunctional acrylate compounds as a Michael acceptor, wherein the part A consists of (i) part Aa being one or more epoxy acrylates having multiple functional acrylate groups, and (ii) part Ab being one or more acrylates different from part Aa and having multiple functional acrylate groups, wherein the part B consists of one or more multifunctional Michael donor compounds, and wherein the weight ratio EAWR of the part Aa to part Ab is ≥ 1.65. The cured foam made by curing the expanded foam forming composition shows good lap shear strength in combination with increased compression strength and tensile adhesion strength.

## Description

This invention is related to a foam forming composition comprising a part A as Michael acceptor compound and a part B as a Michael donor compound, especially for preparing joints between a first and a second construction element, and is related to a joint of a first construction element and a second construction element.

Foams for preparing joints between first and second construction elements are widely used. Especially, polyurethane foams are used for this purpose, however, the precursor materials for preparing polyurethane foams, especially isocyanates, are hazardous and irritant and sensitizing chemicals which may be harmful to the health of people working with them.

Foams for joining first and second construction elements have to fulfill very different requirements due to the field of application, especially in case the first construction element is a frame like a window or door frame and the second construction element is a wall of a building. The respective joint is exposed to various stresses, especially stresses alternating with time, like for instance stresses caused by the weight of and forces to the door or window when opening and/or closing the same, changing temperatures when considering summer and winter seasons, vibrations, for instance generated by nearby traffic of vehicles, stresses by external forces like wind forces and the like. Furthermore, in this field of application different stresses to the first and second construction element are applied. Accordingly, the cured foam should have good adhesion to the first and second constructional element. Furthermore, the cured foam should have good mechanical properties like compression strength and tensile strength.

To avoid the use of isocyanate foams it is known in the art to use foams on basis of carbon Michael-addition reactions. However, also these foams have to fulfill the given requirements in view of alternating stresses as sketched above.

Furthermore, the foam forming composition should have low environmental impacts, especially with respect to the nonvolatile compounds of the composition. Furthermore, preferably parts A and B should be adapted to be foamed by a halogen-free propellant, so that the propellant has low greenhouse effects and/or ozone depleting effects. Preferably, a halogen-free propellant is used.

Accordingly, it is the object of the present invention to provide a foam forming composition by application of which joints between first and second construction elements can be established favorably, wherein the cured foam shall comprise at least one or a combination of favorable physical properties, especially when establishing a joint by filling a gap between two adjacent constructional elements. Furthermore, it is the object of the present invention to provide a joint between a first and a second construction element wherein the joint is at least partially made by a foam forming composition. Especially, the first constructional element may be a door frame or window frame and the second construction element is the respective wall portion facing said window or door frame and the foam prepared by the foam forming composition is specifically adapted to this application.

This object is solved by providing a foam forming composition according to claim 1, by providing a cured foam according to claim 11 and by providing a joint according to claim 14. Preferred embodiments are defined in the dependent claims.

### Foam forming composition

According to claim 1 a foam forming composition is provided, the composition comprising a part A and a part B, a catalyst and a propellant, the part A consisting of one or more multifunctional acrylate compounds as a Michael acceptor, wherein the part A consists of
(i) part Aa being one or more epoxy acrylates having multiple functional acrylate groups, and
(ii) part Ab being one or more acrylates different from part Aa and having multiple functional acrylate groups, preferably not comprising epoxy compounds,
wherein the part B consists of one or more multifunctional Michael donor compounds, the foam forming composition comprising a catalyst for reacting part A and part B with one another in a Michael addition reaction, wherein the weight ratio EAWR of the part Aa to part Ab is ≥ 1.65.

Accordingly, part Ab consist only of acrylates not being epoxy acrylates.

In diligent studies it has been found by the inventors that a foam forming composition according to the present invention results in a cured foam having good or improved adhesion to a constructional element and/or improved compression strength and/or improved high tensile strength. At least one or two or three features ofadhesion, compression strength and tensile strength are improved by providing a cured foam made according to the invention. It is already a benefit over prior art foam forming compositions and respective foams if good adhesion to a constructional element is achieved and compression strength and/or tensile strength are improved. It also is a benefit over prior art foam forming compositions and respective foams if compression strength is good and adhesion and and/or tensile strength are improved. It also is a benefit over prior art foam forming compositions and respective foams if tensile strength is good and adhesion to a constructional element and and/or compression strength are improved.

Good adhesion of the cured foam according to the invention is given to various materials of first and second construction elements in buildings, especially window or door frames, including to wooden first construction elements having a surface being applied with the foam forming composition on one hand, for instance wooden door or window frames, and to a second construction element like for instance a wall of a building on the other hand, especially a wall predominantly made of an inorganic mineral material like a stone, for instance concrete, limestone, bricks, sandstone or the like. Good or especially high adhesion especially is desired when one of the constructional elements being a joint comprises a movable element, like for instance an openable and closable element like a window or a door, so that stress like for instance vibrations may be applied to the respective construction elements as e.g. a frame, when opening and closing the element. However, the application of the foam or the joint being provided is not restricted to this combination of materials.

Due to the above mentioned favorable physical features of the cured foam being made by expanding and curing the foam forming composition of the invention, especially a combination of good or improved lap shear strength and/or high compression values and high tensile strength values, a joint between first and second construction elements with high quality and high resistance against external stresses like stresses caused by the weight of and forces to the door or window when opening and/or closing the same, external forces, vibration etc. can be provided. This joint especially may be a gap between constructional elements to which changing external stresses are applied and/or different stresses to the first and the second constructional element are applied, especially different stresses to the first and to the second construction element, what especially would be given in case the first construction element is a window frame or door frame and the second construction element is a wall, for instance a wall of a building. The first and second construction elements, especially the window or door frame and the wall, may consist of different materials, for instance wood and stone, respectively, without being restricted thereto. For instance, different stresses to the first and second constructional element are applied in window- or door frame construction due to different thermal expansions of the different materials of the first and second constructional elements, different wind load to construction elements of the joint, which might be exposed to the weather, etc. However, the invention is not restricted to the kind of joints as mentioned above.

Especially, it has been the finding of the inventors that an improved cured foam can be provided by curing a foam made by the foam forming composition of the invention, by providing part A comprising significant amounts of component Aa, being one or more epoxy acrylates, wherein the weight ratio EAWR part Aa (epoxy acrylates) to part Ab (non-epoxy acrylates) is ≥ 1.65. Accordingly, high reliable joints under impact of stresses that especially will occur in window- and door frame joints with gaps being filled with the cured foam can be achieved by providing a foam forming composition according to the present invention and by preparing a joint between a first and a second construction element using the foam forming composition according to the present invention and curing it to a cured foam.

Furthermore, the foam forming composition according to the present invention is environmentally friendly, it can be or is prepared, preferably completely prepared, by compounds having low or no hazardous properties. Furthermore, the foam forming composition is adapted to be foamed by a propellant which comprises a very low content or a zero content of halogen components in the propellant. The foam forming composition may have no or no significant amounts of volatile halogen components. Also the entire composition, perhaps excluding plasticizers and/or fire retardant components, may have low halogen contents or is free from halogen components, but wherein also halogen-free plasticizers or halogen-free fire retardant components may be used. The halogen content of the composition may be ≤ 5 wt.-% or 3 wt.-%, preferably ≤ 2 wt.-% or ≤ 1 wt.-%, further referred ≤ 0.5 wt.-% or ≤ 0.25 wt.-% or ≤ 0.1 wt.-%.

Preferably, the propellant is free from halogen atoms.

The foam forming composition of the invention especially is a foamable composition, which especially may be foamed by pressure release of the propellant.

The preferred embodiments of the present invention result in foam forming compositions or respective cured foams or respective joints of a first and a second construction element with improved properties as mentioned to the present invention. This especially is given with respect to the adhesion properties of the cured foam to material surfaces, especially made of wood and/or stone materials, but may lead also to improved other properties like compression strength and/or tensile strength and/or specific compression strength.

Preferably the weight ratio EAWR of part Aa to part Ab is ≥ 1.70 or more preferably ≥ 1.75, especially more preferably ≥ 1.80 or ≥ 1.90 or ≥ 2.0. The weight ratio EAWR also may be ≥ 2.25 or ≥ 2.5 or ≥ 3.0. The weight ratio EAWR also may be ≥ 5.0 or ≥ 6.5 or higher. It has been found by the inventors that a higher EAWR ratio results in improved compression strength and improved tensile strength of the cured foam, wherein high lap shear strength is given, especially to wood. The weight ratio EAWR of part Aa to part Ab may be ≤ 10 or ≤ 8, especially ≤ 6 or ≤ 5, more specifically ≤ 4.5 or ≤ 4.25 or ≤ 4.0 or ≤ 3.75 or ≤ 3.5, it may be ≤ 3, for instance ≤ 2.5.

Preferably, the molar ratio EqR (equivalent ratio) of functional Michael addition reactive acrylate groups of part A to functional Michael addition reactive donor groups of part B is ≥ 0.8 and/or is ≤ 2.5, especially ≤ 2.25 or ≤ 2.0. Functional Michael addition reactive acrylate groups of part A are acrylate groups of part A being capable in Michael addition reaction as an acceptor. Functional Michael addition reactive donor groups of part B are capable in Michael addition reaction as a donor. The EqR ratio may be ≥ 0.9 or ≥ 0.95 or ≥ 1.0 or ≥ 1.1 or ≥ 1.2 or ≥ 1.3 or ≥ 1.5 or ≥ 1.7. The EqR ratio may be ≤ 2.5 or ≤ 2.3 or ≤ 2.2. Preferably, the EqR ratio is in the range of 1.0 to 2.0 or 1.2 to 2.0 or of 1.4 to 1.8. Preferably, the EqR ratio is about 2.0, so that when for instance using acetoacetate and/or malonate groups, thereby a 100% conversion is given as acetoacetate groups and malonate groups have two reactive hydrogens groups.EqR ratios above 2.0 define an excess of acrylate and often will not lead to improved mechanical properties or even to inferior mechanical properties, when the EqR value is too high, especially being ≥ 2.0 or ≥ 2.5, but in some cases such high EqR values may be acceptable. EqR-ratios of ≤ 1.0 may lead to reduced mechanical properties, for instance reduced tensile strength and/or compression strength, but in some cases such low EqR values may be acceptable.

Suitable compounds Aa, i.e. multifunctional epoxy acrylates, especially are multifunctional epoxy acrylates having at least two epoxy acrylate groups, preferably 2 to 6 or up to 5, up to 4 or up to 3 epoxy acrylate groups, most preferably 2 epoxy acrylate groups, including mixtures thereof. Compounds Aa may comprise multifunctional epoxy acrylates having 2 to 6 or up to 5, up to 4 or up to 3 acrylate groups, most preferably just 2 epoxy acrylate groups, or mixtures thereof, to a content of ≥ 20 wt or ≥ 35 wt-% or ≥ 50 wt-%, preferably ≥ 65 wt-% or ≥ 75 wt-%, more preferably ≥ 80 wt-% or ≥ 90 wt-% or most preferred 100 wt-% based on the weight of the component Aa.

Epoxy acrylates are considered to be acrylic acid esters, where the acrylic acid group has reacted with the epoxy group under opening of the epoxy ring and building an acrylic-CH2-CH(OH)-CH2-groups like for instance: 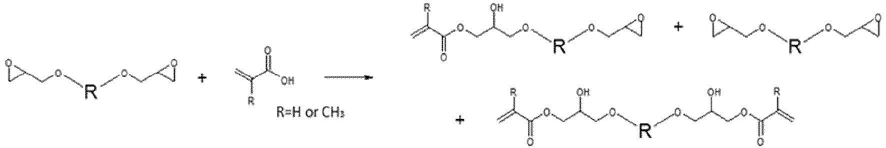 **EPOXY RESIN AA or MAA Half Epoxy Acrylate Oligomer(Mixture)**
wherein the compound of part Aa according to the invention is the third reaction product, having two acrylic groups, being a multifunctional epoxy acrylate. Evidently, as stated above, the precursor of compound Aa, being reacted with acrylate compounds like especially acrylic acid, may comprise more than 2 epoxy groups. In this reaction scheme, according to the present invention, residue "R" of the epoxy resin is an organic residue. "R" may be an aromatic or aliphatic or arylaliphatic residue like for instance a diphenyl methane group, which may be unsubstituted or may be substituted, especially substituted with alkyl groups. Residue "R" of the epoxy resin may comprise 1 to 40 or 2 to 30, preferably 6 to 25 or 8 to 20 carbon atoms, for example about 15 carbon atoms, without being restricted thereto. Residue "R" of the AA or MAA compound may be H or a C1-C15 group or a C1-C12 group or a C1-C8 group, preferably C1-C6 or C1-C4 group, especially methyl, ethyl or propyl, without being restricted thereto, wherein said groups may comprise heteroatoms, preferably do not comprise heteroatoms.

In the compound Aa, preferably all of the epoxy groups may be modified by reaction of an acrylic compound, especially an acrylic acid, with the epoxy groups as given in the above reaction scheme, so that no free epoxy groups are present in the part Aa of the invention.

Especially, multifunctional epoxy acrylates with low functionality, especially up to 4 or up to 3, especially 2, are preferred, resulting in foams not having too high rigidity.

Suitable multifunctional epoxy acrylates for instance may be acrylate esters of alkyl-, alkylaryl- or aryl epoxy resins, or mixtures thereof. Suitable epoxy resins may contain resins or consist of resins containing aliphatic, cyclo-aliphatic, or aromatic backbones. For instance, as aliphatic epoxy resin diethylene glycol diglycidyl ether epoxy resins may be suitable.

Preferably, the backbone and/or substituents of the epoxy resin may comprise aromatic groups. Especially the backbone of the multifunctional epoxy acrylates may comprise bisphenol groups, especially aromatic and aliphatic groups in combination. Especially, in the backbone of the epoxy acrylate esters of the invention the alkyl and/or alkylaryl groups may comprise or be linear or branched or cyclic groups, especially may comprise cyclic and/or branched groups. The backbone of the epoxy resin also may comprise aliphatic polyether groups, for instance polyether groups based on polyoxyethylene compounds or polyoxypropylene compounds with > 2 or > 3 or > 4 or > 6 monomeric units, preferably < 10 or < 6 monomeric units.

Especially, multifunctional - more specifically difunctional - acrylate esters of bisphenol epoxy resins may be used as components of part Aa, for example those of bisphenol A, AF, AP, B, BP, C, E, F, FL, G, M, P, PH, S, TMC, Z, or mixtures thereof, namely:
4,4'-(1-Methylethyliden)bisphenol; 4,4'-[2,2,2-Trifluor-1-(trifluormethyl)ethylidenyl]bisphenol;
4,4'-(1-Phenylethyliden)bisphenol; 4,4'-(1-Methylpropyliden) bisphenol; 4,4'-(Diphenylmethylen)bisphenol; 4,4'-(1-Methylethyliden)bis(2-methylphenol); 4,4'-Ethyliden bisphenol;
4,4'-Methylenbisphenol; 4,4'-(9H-Fluoren-9-yliden)bisphenol;
4,4'-(1-Methylethyliden)bis[2-(1-methylethyl)phenol];
4,4'-[1,3-Phenylenbis(1-methylethyliden)]bisphenol;
4,4'-[1,4-Phenylenbis(1-methylethyliden)]bisphenol;
5,5"-(1-Methylethyliden)bis([1,1'-biphenyl]-2-ol;
4,4'-Sulfonylbisphenol; 4,4'-(3,3,5-Trimethyl cyclohexyliden)bisphenol; 4,4'-Cyclohexylidenbisphenol.

Especially, diacrylic esters of epoxy bisphenol A resins may be used.

Especially, the bisphenol compound may be etherified by a glycidyl compound and/or an epoxidated cyclohexenyl compound. The compounds may be prepared, for instance, by forming the ethers comprising epoxy groups by reaction of the polyalcohol with the epoxy compound like e.g. the glycidyl compound and/or an epoxidated cyclohexen compound, according to general knowledge with respect to epoxy resins.

Especially, bisphenol diglycidyl epoxy compounds and/or hydrogenated bisphenol diglycidyl epoxy compounds may be applied. Especially, bisphenol diglycidyl epoxy compounds may be applied. More specifically, bisphenol A diglycidyl epoxy compounds and/or hydrogenated bisphenol A diglycidyl epoxy compounds may be applied, especially, bisphenol A diglycidyl epoxy compounds.

Instead of the bisphenol compound of the epoxy resin, also hydrogenated bisphenol compounds may be used, i.e. cyclic aliphatic compounds, wherein the aromatic groups of the bisphenols are, preferably completely, hydrogenated. In general, as epoxy acrylates aliphatic epoxy acrylates and/or cycloaliphatic epoxy acrylates may be used. Aliphatic epoxy acrylates, including cycloaliphatic epoxy acrylates, may partially or totally replace aromatic epoxy acrylates, as for instance bisphenol epoxy acrylates. However, aromatic bisphenol compounds of the epoxy resin are preferred, especially with respect to the foam properties like compression strength, tensile strength and/or lap shear strength.

These compounds: 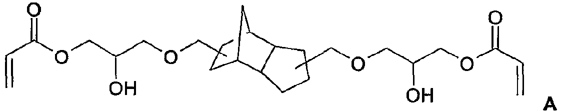 or 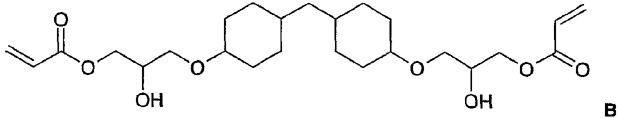 also are covered as compounds of part Aa according to the invention, wherein these compounds A and B as mentioned above may be substituted, for instance wherein the cyclic groups and/or -CH2- groups being arranged between the two cyclohexyl rings may be substituted, especially substituted with one or two alkyl groups, especially C1-6 alkyl groups, especially methyl or ethyl groups.

Furthermore, for instance, as compounds Aa multifunctional acrylic esters of 3,4 epoxy-6-methyl-cyclohexyl-methyl, vinylcyclohexane dioxide or dicyclopentadiene dioxide may be used, also in mixture with other compounds Aa.

Accordingly, mutifunctional acrylic esters of epoxy resins for example may be prepared as follows, and the resulting acrylic ester may be used as part Aa component in the present invention, wherein n may be 0, 1 or up to 10 or up to 20 or higher, wherein n may be up to 6 or up to 4 or 3 or 2, without being restricted thereto. Instead of bisphenol A as given in this reaction scheme other bisphenols or other multifunctional hydroxy compounds as for instance aliphatic diols or polyols may be used, including cycloaliphatic diols or polyols:

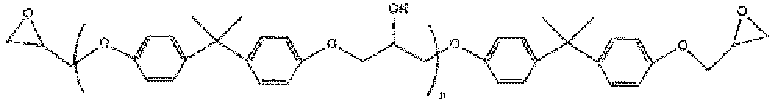

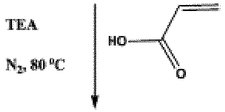

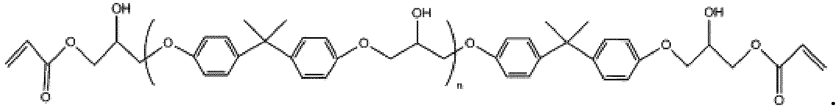

The acrylic compound for preparation of the acrylic esters of epoxy resins, for instance according to the reactionscheme as shown above, especially may be monofunctional acrylic compounds, for instance monoacrylic acids like for instance acrylic acid or methacrylic acid, preferably acrylic acids, or reactive derivatives thereof like acid halogenates or the like.

Part Aa may comprise epoxy acrylates being multifunctional acrylate esters of aromatic epoxy compounds according to the present invention, including mixtures thereof, to a content of ≥ 10 wt.-% or ≥ 20 wt.-% or ≥ 25 wt.-% or ≥ 35 wt.-% or ≥ 40 wt.-% or ≥ 50 wt.-%, preferably ≥ 65 wt.-% or ≥ 75 wt.-%, more preferably ≥ 80 wt.-% or ≥ 90 wt.-% or ≥ 95 wt.-% or most preferred about 100 wt.-% based on the weight of the component Aa.

Especially, part Aa may comprise epoxy acrylates being multifunctional acrylate esters of bisphenol epoxy compounds according to the present invention, including mixtures thereof, especially multifunctional acrylate esters of bisphenol A epoxy compounds, to a content of ≥ 10 wt.-% or ≥ 20 wt.-% or ≥ 25 wt.-% or ≥ 35 wt.-% or ≥ 40 wt.-% or ≥ 50 wt.-%, preferably ≥ 65 wt.-% or ≥ 75 wt.-%, more preferably ≥ 80 wt.-% or ≥ 90 wt.-% or ≥ 95 wt.-% or most preferred about 100 wt.-% based on the weight of the compounds of part Aa. High contents of these compounds result in favorable properties of the cured foam, especially good compression strength and/or tensile strength, especially in combination with good adhesion or good lap shear strength of the foam forming composition without propellant, respectively. However, also properties of the foamed, uncured composition may be favorably like higher foam stability and lower shrinkage during curing. The bisphenols of the bisphenol epoxy resins especicially may be bisphenol A, AF, AP, B, BP, C, E, F, FL, G, M, P, PH, S, TMC, Z, or mixtures thereof, especially bisphenol A.

To improve fire retardant properties of the cured foam, halogenated, especially bromine substituted, epoxy esters as part Aa may be applied. Preferably no halogenated epoxy esters as part Aa may be applied, but other fire retardent components may be used.

Part Aa may have a Höppler viscosity at 60°C of about 250 mPa.s to about 50.000 mPa.s, preferably of about 500 mPa.s to about 25.000 mPa.s or of about 1.000 mPa.s to about 15.000 mPa.s, more preferably of about 1.250 mPa.s to about 10.000 mPa.s or of about 1.500 mPa.s to about 5.000 mPa.s, for instance of about 3.000 mPa.s.

The compounds of part Aa may have a molecular weight, especially theoretical molecular weight, of about 150 to 3.000, without being restricted thereto, preferably from 200 to 2.000 or 250 to 1.500, more preferably 300 to 1.000, for instance from about 350 to 750. In case part Aa is a mixture of more than one compound, then the "molecular weight" as mentioned above corresponds to the molecular weight of each compound of part Aa, is the weighted average of molecular weight of the compounds, wherein the weight is given by multiplication of the molecular weight of the respective compound by its weight ratio in the component Aa, based on the weight of component Aa.

Suitable compounds of part Ab, namely multifunctional acrylates being different from component Aa, which are functioning as Michael acceptor components, include, for example, molecules in which some or all of the functional groups are residues of (meth)acrylic acid, (meth)acrylamide, fumaric acid, or maleic acid, or substituted versions thereof. In this description, (meth)acryl is to stand for either acryl or methacryl.

Accordingly, components of part Ab preferably are not based on epoxy type resins, especially, preferably are not reaction products from the reaction of an epoxy compound with an arylic compound. Preferably components of part Ab do not comprise epoxy groups. Preferably components of part Ab do not comprise groups being derived from epoxy groups by addition reaction with nucleophilic groups like acrylic acid, methacrylic acid or their derivatives like their esters under ring opening of the epoxy group. Preferably components of part Ab do not comprise -O-CH2-CH(OH)-CH2-O- groups and/or do not comprise -O-CH2-CH(OR)-CH2-O- groups, wherein R may be H or an organic residue as for instance an alkyl group.

Suitable compounds of part Ab, namely multifunctional acrylates being different from compounds of part Aa, which are functioning as Michael acceptor compounds, especially may be 1,4-butane-diol diacrylate, 1,6-hexanediol diacrylate, neopentyl glycol diacrylate, diethylene glycol diacrylate, triethylene glycol diacrylate, tetraethylene glycol diacrylate, polyethylene glycol diacrylate, dipropylene glycol diacrylate, tripropylene glycol diacrylate, cyclohexane dimethanol diacrylate, alkoxylated hexanediol diacrylate, alkoxylated cyclohexane dimethanol diacrylate, propoxylated neopentyl glycol diacrylate, trimethylolpropane triacrylate, trimethylolpropane tetraacrylate, dipentaerythritole pentaacrylate, ethoxylated trimethylolpropane triacrylate, propoxylated trimethylolpropane triacrylate, propoxylated glyceryl triacrylate, dipropylene glycol diacrylate, acrylated polyester oligomer, bisphenol A diacrylate, ethoxylated bisphenol A diacrylate, tris(2-hydroxyethyl) isocyanurate triacrylate, urethane diacrylate, acrylated aliphatic urethane oligomer, acrylated aromatic urethane oligomer, and the like, and mixtures thereof.

Accordingly, suitable components of part Ab may be alkylene diol diacrylates, poly alkylene glycol diacrylate, alkyl glycol diacrylates, cycloalkyl dialkylhydroxy diacrylates, alkoxylated alkyldiol diacrylates, polyalkylhydroxy alkyl triacrylates and tetraacrylates, alkoxylated polyalkyl tri- and tetraacrylates, alkoxylated glyceryl triacrylate, and mixtures thereof. The said components preferably comprise < 100, < 75, < 50 carbon atoms, preferably or < 40 or < 30 or < 20 carbon atoms.

Within the scope of the present invention, with respect to compounds of part Aa and/or Ab, the multifunctional acrylate compounds may be replaced partially or totally by the respective methacrylates compounds. Preferably, with respect to compounds Aa and/or Ab acrylates not being methacrylates are used, or the content of methacrylates in part Aa or in part Ab or in part Aa and Ab in combination is < 50 wt.-% or < 25 wt.-% or < 10 wt.-% or < 5 wt.-% based on the weight of the respective part.

The compounds Ab especially may be multifunctional non-epoxy acrylates. Preferably, part Ab comprises no acrylic esters of epoxy resins.

The functionality of multifunctional non-epoxy acrylates of part Ab may be 2 to 10 or 2 to 8, especially 2 to 6 or 3 to 6, especially 2, 3, 4, 5 or 6. Several multi-functional acrylates of different functionality may be present in component Aa. Especially, part Ab may have a functionality of 3 or higher.

Preferably, part Ab comprises ≥ 20 wt-% of multifunctional acrylates having a functionality of 2 or higher or ≥ 35 wt-% or ≥ 50 wt-%, preferably ≥ 65 wt-% or ≥ 75 wt-%, more preferably ≥ 80 wt-% or ≥ 90 wt-% or ≥ 95 wt-% or most preferred 100 wt-% of a functionality of 2 or higher. Preferably, part Ab comprises ≥ 20 wt-% of multifunctional acrylates having a functionality of 3 or higher or ≥ 35 wt-% or ≥ 50 wt-%, preferably ≥ 65 wt-% or ≥ 75 wt-%, more preferably ≥ 80 wt-% or ≥ 90 wt-% or ≥ 95 wt-% or most preferred 100 wt-% of a functionality of 3 or higher. Preferably, in the weight percentages as mentioned before, the funtionality of the acrylates of part Ab is 4 or higher. This results in higher crosslinking of the polymer backbone network of the reaction product of part A and part B in the cured foam and therefore improved mechanical properties like tensile strength, compression strength, less shrinkage, without being restricted thereto.

Suitable compounds of part B especially may be of one or more multifunctional beta-keto acid esters, especially beta-keto acid esters of carboxy acids, more specifically acetoacetates, or malonates or multifunctional beta-cyano carboxylic acid esters, especially cyanoacetates, or multifunctional acetoacetamides or multifunctional beta-diketones, or mixtures thereof, especially mixtures comprising multifunctional acetoacetates. Preferably, part B consists of one or more compounds as mentioned above, including mixtures thereof.

Preferably, part B is consisting of one or more multifunctional beta-keto acid esters, especially beta-keto acid esters of carboxy acids, more specifically acetoacetates, or malonates or multifunctional beta-cyano carboxylic acid esters, especially cyanoacetates, or multifunctional acetoacetamides, or mixtures thereof.

Preferably, part B is consisting of one or more multifunctional beta-keto acid esters, especially beta-keto acid esters of carboxy acids, more specifically acetoacetates, and/or malonates. Respective foam forming compositions show good reactivity in the Michael addition reaction and/or good storage properties, namely long storage times of the foam forming compositions, are environmentally friendly and result in good foam properties.

Suitable functional groups of part B especially comprise a methylene group in α-position to one or two carbonyl groups, such as esters of α-acylated carbonic acids and/or malonates. Examples are acetoacetates, acetoacetamides, cyanoacetates, and cyanoacetamides. Also suitable are cyanides, amines, thiols, phenolates, nitroesters, 1,3-diketones.

Examples for compounds of part B are butane diol diacetoacetate, 1,6-hexanediol diacetoacetate, neopentylglycol diacetoacetate, the diacetoacetate of 4,8-Bis(hydroxymethyl)tricyclo [5.2.1.0^{2,6}]decane, 2-methyl-1,3-propanediol diacetoacetate, diethylene glycol diacetoacetate, ethylene glycol diace-toacetate, propylene glycol diacetoacetate, dipropylene glycol diacetoacetate, polyethylene glycol diacetoacetate, polypropylene glycol diacetoacetate, cyclohexanedimethanol diacetoacetate, other diol diacetoacetates, trimethylol propane triacetoacetate, pentaerythritol triacetoacetate, glycerol trisacetoacetate, trimethylolethane triacetoacetate, other triol triacetoacetates, diacetoacetates of triols, analogous malonate esters, and the like, or mixtures thereof. Some further examples of suitable and preferred multi-functional Michael donors include tetra-, penta-, and higher acetoacetates of polyols (i.e., polyols in which four, five, or more hydroxyl groups are linked to acetoacetate groups through ester linkages), including, for example, pentaerythritol tetraacetoacetate, glucose tetraacetoacetate, glucose pentaacetoacetate, dipentaerythritol pentaacetoacetate, and dipentaerythritol hexaacetoacetate, and mixtures thereof. Further examples are for mono- or di-esters of malonic acid, especially di-esters as for example diethyl malonate and/or dipropyl malonate. The above mentioned components B may be present in mixtures with one another in the foam forming composition.

Furthermore, malonates may be used as part B compound, especially mono- and/or di-esters of malonic acid, more specifically di-esters of malonic acid. Multifunctional malonates may be applied, comprising 2 or more malonate groups, for instance comprising 3, 4, 5 or 6 or up to 8 or more malonate groups. In the multifunctional malonates one carboxy group of each of the malonic acid units may be bounded to a core by chemical reaction, for instance by esterification, wherein the core comprises 2, 3, 4, 5 or 6 or more respective functional groups, like for instance hydroxyl groups. Part B may consist of malonates. Especially the said malonates may be polyesters of malonic acid and diols, wherein minor amounts of polyersters of malonic acid with triols may be present. Preferably ≥ 50 wt-% or ≥ 70 wt-% or ≥ 80 wt-% or ≥ 90 wt-% or ≥ 95 wt-% of the malonates are polyesters of malonic acid and diols, based on the total weight of malonates of part B.

Particularly preferred Michael donor compounds are multifunctional acetoacetates and/or multifunctional malonates.

Preferably, part B comprises, based on the weight of component B, ≥ 20 wt-% or ≥ 30 wt-%, especially ≥ 50 wt-%, preferably ≥ 65 wt-% or ≥ 75 wt-%, more preferably ≥ 80 wt-% or ≥ 90 wt-% or ≥ 95 wt-% or up to about 100 wt.-% of one or more multifunctional beta-keto acid esters, especially beta-keto acid esters of carboxylic acids, more specifically acetoacetates.

Preferably, part B comprises, based on the weight of component B, ≥ 20 wt-% or ≥ 30 wt-%, especially ≥ 50 wt-%, preferably ≥ 65 wt-% or ≥ 75 wt-%, more preferably ≥ 80 wt-% or ≥ 90 wt-% or ≥ 95 wt-% or up to about 100 wt.-% of one or more multifunctional beta-keto acid esters, especially beta-keto acid esters of carboxylic acids, more specifically acetoacetates, and malonates. However, malonates may be present in part B, based on the weight of component B, to ≤ 100 wt-% or ≤ 80 wt-% or ≤ 70 wt-% or ≤ 50 wt-% or ≤ 35 wt-% or ≤ 25 wt-% or even ≤ 20 wt-% or ≤ 10 wt-% or ≤ 5 wt-% or ≤ 2 wt-%, or may not be present, without being restricted thereto.

Preferably, the compounds of part A and part B in combination are present to ≥ 30 wt-% or ≥ 40 wt-% in the composition, preferably to ≥ 50 wt-%, more preferably to ≥ 60 wt-% in the foam forming composition, based on the weight of the foam forming composition. This results in favorable properties as stated above, and may result additionally in favorable properties of the expanded uncured foam, especially good foam stability and low shrinkage during curing. The catalyst, promoting the reaction between part A and part B in a Michael addition reaction, preferably is a weak or a strong base, with respect to its pKb value. Suitable basic catalysts are aqueous water soluble hydroxides, especially alkali hydroxides, especially potassium hydroxide, sodium hydroxide, aqueous water soluble carbonates, especially potassium carbonate, sodium carbonate, sodium alkanolate such as sodium ethanolate, potassium alkanolate such as potassium ethanolate, organic basis, especially having basic nitrogen atoms, 1,1,3,3-tetramethylguanidine (TMG), 1,8-diazabicyclo[5.4.0]undec-7-ene, 1,5-diazabicyclo[4.3.0]non-5-ene, 1,3,5-triazabicyclo[4.4.0]dec-5-ene, tetrabutylammonium hydroxide and combinations thereof. Water soluble carbonates are preferred as having sufficient or high catalytic activity, being less harmful and easily disposable, especially potassium carbonate as having high solubility in water.

The catalyst may be provided in a solvent, providing a solution of the catalyst. The concentration of the catalyst in the solvent, for instance water, may be in the region from 5 weight percent or from 10 weight percent to the saturation concentration of the catalyst in the solution at ambient temperature, e.g. at 20°C, preferably in the range of 20 to 80 weight percent or 30 to 70 weight percent or especially about 50 weight percent of the catalyst in the solution.

The amount of catalyst applied in relation to the total weight of the foam forming composition preferably is between 0.1 and 10 wt.-%, or between 0.2 and 8 wt.-%, or between 0.3 and 7 wt.-%, the amount may be between 0.3 and 5 wt.-%. This weight ratio refers to the catalyst, i.e. without its solvent, if a solvent is used.

The foam forming composition comprises a propellant, preferably a volatile propellant, which is effective for spraying or dispensing the composition by pressure release of the pressurized foamable composition, especially being pressurized by the gas pressure of the propellant. The propellant may be in the from of at least one or a combination of compressed compounds, each of these compounds of the propellant is gaseous at room temperature (23°C) and normal pressure (1013 hPa). Preferred examples of propellants are hydrocarbons (including mixtures of hydrocarbons), like lower alkanes up to and including butane (including n- and/or iso-butane), for example propane/butane mixtures, including propane and/or isobutane, or ethers, especially alkylethers like dimethyl ether, or combinations of said propellants. Other propellants like pressurized air, nitrogen or the like may be used. Hydrocarbons or dimethyl ether or combinations of them preferably are the predominant compound(s) of the propellant, preferably in total ≥ 50 wt.-% or ≥ 75 wt.-% or up to about 100 wt.-% of the propellant. Propellants like halogenated hydrocarbons may be used, but preferably are not used.

The propellant preferably is present in the foam forming composition in an amount of ≥ 2 wt.-% or ≥ 4 wt.-% or ≥ 6 wt.-% or ≥ 10 wt.-%. The content of the propellant in the foam forming composition may be ≤ 40 wt.-% or ≤ 30 wt.-% or ≤ 25 wt.-% or ≤ 20 wt.-%, based on the total weight of the composition. The respective amount of propellant enables proper ejection of the foam forming composition by pressure release of the propellant.

The foam forming composition preferably comprises at least one or a combination of surfactants. The at least one surfactant may comprise at least one non-ionic surfactant, or at least one anionic surfactant, or a combination of both.

Preferred non-ionic surfactants are ethoxylates of alkyl phenols, fatty alcohols, fatty acids, polar glycol ethers or siloxanes or combinations of them. Especially siloxanes may be used. Particular preferred are also polysiloxane-polyether copolymers, preferably block copolymers. The molecules of these surfactants consist normally of at least one polysiloxane chain as hydrophobic part and a polyether (frequently polyalkoxylate) chain or a polyol or sugar as hydrophilic part. The chains may be linear or branched. So-called bolasurfactants comprising a polysiloxane chain and a hydrophilic, for example polyalkoxylate chains on both ends thereof are also suitable for performing the invention. Examples are polyether polydimethylsiloxane copolymers. A large number of polysiloxane-polyether surfactants are sold under the brand name TEGOSTAB by Evonik, Düsseldorf, Germany. Mixtures of different non-ionic surfactants, especially those mentioned above, may be used.

Preferred anionic surfactants are sulphonic acids or sulphates based upon linear or branched hydrocarbon residues, fatty alcohol residues, alkyl phenyl residues, alkyl polyoxyethylene residues, fatty acid residues. Preferred anionic surfactants are alkyl sulphonates.

Other suitable surfactants are those having betaine structure, i.e. both containing cationic and anionic groups. For instance, amphoteric N-alkyl betaines like derivatives of trimethylglycine may be used, for example laurylamidopropyl-dimethylbetaine.

The surfactant, including combination of surfactants, may be present in the foam forming composition to a content of ≥ 0.1 wt.-% or ≥ 0.2 wt.-% or ≥ 0.4 wt.-% or ≥ 0.6 wt.-% or ≥ 1.0 wt.-%. The content of the surfactant in the foam forming composition may be ≤ 20 wt.-% or ≤ 10 wt.-% or ≤ 8 wt.-% or ≤ 5 wt.-% or ≤ 3wt.-%, without being restricted thereto. The given weight percentages are based on the total weight of the composition.

The at least one surfactant may be present in the part A and/or in the part B, especially in case part A and part B are stored in different, separate compartments of a device.

The foam forming composition may further comprise at least one or more additives, for instance one or more additives selected from flame retardants, filler materials, reinforcing materials, diluents and/or thinners, foam stabilizers, thickeners, plasticizers, rheological agents, adhesion promoters, anti-aging agents, dyes, pigments, dispersing agents, or combinations thereof. Rheological agents, diluents and/or thinners for instance may be applied to adjust the viscosity of the composition and to adjust it to appropriate values for application of the foam forming composition.

Preferably the additives are formulated in part A and/or in part B. The additives can for example modify the rheological properties of part A, part Aa, part Ab and/or part B, like viscosity, pseudoplasticity, and can influence density and specific volume of the dispersion with the pressurized gas.

Suitable flame retardants for instance are minerals like aluminum or magnesium hydroxide, expandable graphite, organic phosphates like for instance tris(2-chloroisopropyl)phosphate, triethyl phosphate (TEP) and dimethyl methylphosphonate (DMMP), organic bromine compounds like for instance octabromodiphenylether, borates, or other flame retardant compounds which are used in foam forming compositions. Especially, expandable graphite may be used. Also tris(2-chloroisopropyl) phosphate (TCPP) may be used, which can act also as a plasticizer and diluent.

Pigments may be organic or inorganic like titanium dioxide and carbon black and may be used with a suitable dispersing agent. Also dyes may be used to adjust the color of the foam.

Suitable fillers may be minerals like calcium carbonate, talcum, silica, hydrophobically modified silica, fumed silica, glass or plastic beads, without being restricted thereto.

Reinforcing materials are for example fibers from glass, plastic, carbon, without being restricted thereto. The length should preferably not exceed the diameter of the foam bubbles as desired.

The additives in combination may be present in the foam forming composition without propellant in a content of ≥ 1 wt.-% or 2 wt.-% or ≥ 5 wt.-% or ≥ 10 wt.-% or may be present in a content of ≤ 50 wt.-% or ≤ 40 wt.-% or ≤ 30 wt.-% or ≤ 25 wt.-%, without being restricted thereto.

The viscosity of the foam forming composition without propellant may be between 20 mPas and 1,000,000 mPas or between 50 mPas and 500,000 mPas or between 100 mPas and 50,000 mPas or preferably between 1,000 mPas and 20,000 mPas, measured at 20°C. It is possible to adjust the viscosity to a desired level for example by adding diluents to the formulation, by using oligomer multifunctional donor or acceptor compounds, by adding fillers, thickeners or rheological agents.

The parts A and/or B may be a Newtonian or a non-Newtonian compound or mixture of compounds. The parts Aa and/or Ab may be a Newtonian or a non-Newtonian compound or mixture of compounds. The part A and/or B may be a thixotropic or a non-thixotropic compound. The foam forming composition without propellant may be a Newtonian or a non-Newtonian composition.

Wherever the term "viscosity" is used in this application, it refers to dynamic viscosity determined in accordance with standard ISO 3219-2:2021(en), at ambient temperature (20°C) and shear rate 10 s⁻¹ - if not specified in another way. The measurement is done with a Haake Rotovisco 1 device with plate/plate geometry.

Preferably, the foam forming composition according to the invention is a two-component composition. In case the components of the foam forming composition are quickly mixed with one another and are quickly ejected from a container or can comprising the composition, the foam forming composition may be a one component composition.

Preferably, parts A and B are present together in combination in a first compartment CA and the catalyst is present in a second compartment CB, different from compartment CA. This especially might be given when the foam forming composition is stored. Storing may be achieved over longer than 1 day, longer than 1 week, longer than 1 month or longer than 1 year. Compartments CA and CB may be part of a device for applying or dispensing a foam forming composition like e.g. a two compartment can. Presence of the catalyst in another compartment than parts A and B achieves long storage times of the foam forming composition without unintended reactions and enables good mixing of the components when they are ejected from a dispensing device or system. Separate compartments CA and CB may be part of a system for applying or dispensing the foam forming composition.

Preferably, the propellant is present in compartment CA, i.e. together with parts A and B, when the foam forming composition is stored. The propellant may be present in compartment CB. Preferably, the propellant is not present in compartment CB, i.e. is not present in combination with the catalyst when the foam forming composition is filled into a canister or spraying device, so that it is easier to produce, fill and use the spray equipement. In case the foam forming composition is ejected from a dispensing device which is fluidly connected with an external source of a pressurized gas, the propellant might be mixed with or supplied to part A and part B, preferably only mixed with/supplied to part A and part B but not with the catalyst. This enables a more simple construction and handling of the dispensing device.

In general, the catalyst may be ejected from its compartment to be supplied to parts A and B to catalyse the Michael addition reaction by other appropriate means, for instance by mechanical means or by suction.

In case the parts A and B, at least partially or totally, are provided in different compartments, for instance compartments of a can or a container, the propellant may be present in both or supplied to both compartments CA and CB, irrespective of the components of the foam forming composition being present in respective compartment CA and CB. The propellant may be present in the different compartments CA and CB to different amounts, especially, in case the part of the foam forming composition being in compartment CB is lower than that in compartment CA, the amount of propellant in compartment CB may be lower than that in compartment CA.

However, it is also suitable to provide compartments CA and CB comprising the compounds of the foam forming composition, independent from the arrangement of specific compounds and specific compartments, and by pressurizing the compartments CA and/or CB by a pressurized gas being produced by an external source for pressurized gas. So, it is also possible that compartment B does not contain a propellant, but that the compounds of compartment B are pressurized by mixing with the compounds of compartment A before spraying.

Preferably, the catalyst in compartment CB is completely separated from the parts A and B in compartment CA, so that no portions of parts A and B are present in compartment CB. Furthermore, favorably, no catalyst is present in compartment CA. This avoids any reaction between parts A and/or B with the catalyst during long storage times, especially avoids any reaction like cleavage of chemical bonds of the parts A and B, especially of epoxy acrylates, by the catalyst, especially in case the catalyst is a base, and even more especially when this base also contains a solvent like for instance water.

It might also be possible to provide part A or part Aa or part Ab in a different compartment than part B and to place the catalyst in a compartment in which parts A and part B are not present at the same time, when storing the foam forming composition, so that reaction of the compounds of the Michael addition system in presence of the catalyst is avoided. The propellant might be supplied to part A, namely to parts Aa and Ab, and to part B. It is also possible to pressurize the respective compartments with an external pressurized gas.

Parts Aa and Ab preferably are stored in the same compartment, but also may be stored in different compartments, as long as unintended reactions with other before ejecting the foam forming composition are avoided.

Furthermore, the foam forming composition shows beneficial properties like good to high storage lifetime, shelf time and shelf lifetime.

### Foam formation and Curing

Furthermore, the invention covers a foam being made by expansion and subsequent curing of a foam forming composition according to the present invention. Expansion of the foam forming composition may be achieved as it is generally known by a skilled person. Especially, expansion may be achieved by pressure release of the propellant, wherein the propellant may be stored together with at least one or with some of the compounds of the foam forming composition, or may be achieved by application of an external pressurized gas. The compounds of the foam forming composition may be stored in two or more separate compartments to avoid a reaction between the components before expansion. Compounds of the foam forming composition which are not stored together with the propellant, for instance the catalyst, may by ejected with other appropriate means from the respective compartment, preferably simultaneously together with the other compounds of the foam forming composition which are ejected by pressure release of the propellant. Reference to the statements according to the present invention with respect to the application and storage of the propellant with other compounds like especially part A, part Aa, part Ab and part B and the catalyst is made. Furthermore, reference to the statements according to the present invention with respect to the use of an external pressurized gas is made. All of the compounds of the foam forming composition may be ejected simultaneously.

The foam forming composition especially may be applied as a 2 component composition, without being restricted thereto
In general, the components of the foam forming composition being stored in separate first and second compartments CA, CB may be mixed with one another by ejecting the components together with a pressurized gas from the respective compartments. The expansion may be achieved by ejection of the components of the foam forming composition being stored in separate first and second compartments CA, CB into the atmosphere of the spatial environment to which the foam forming composition is to be applied, for instance a joint is arranged to which the foam forming composition is to be applied to fill the joint at least partially or totally. Furthermore, the foam forming composition may be used to glue two constructional parts with one another, wherein the foam is applied to the surface on one or both constructional parts and than the constructional parts are put on one the other to bond them together.

Curing of the foam forming composition may be accomplished by exposing the foamed composition to the atmosphere in which a joint to which the foam forming composition is to be applied or in which a gap to which the foam forming composition is applied to fill the gap at least partially or totally, is arranged. The atmosphere, into which the foam forming composition is supplied for curing, may have a temperature in the range of -5°C to 40°C or preferably 0°C to 35°C, more preferably 10°C to 25°C. Curing is achieved by reaction of part A with part B, preferably by catalytic action of the catalyst which is catalysing the reaction between components A and B. During curing volatile components of the foam forming composition may evaporate. Curing may be achieved without uptake of components from the atmosphere into which the foam forming composition is foamed, for instance without uptake of water or CO2 from the atmosphere.

The term "cured foam" refers to a cured foam forming composition according to the present invention. With respect to the cured foam, preferably the foam forming composition is expanded to generate a foam, wherein subsequently the foam is cured, to generate the cured foam.

Preferably, the cured foam has a compression strength of ≥ 40 kPa, preferably ≥ 50 kPa or ≥ 60 kPa. The compression strength may be ≤ 200 kPa or ≤ 175 kPa or ≤ 150 kPa or ≤ 125 kPa, without being restricted thereto. The compression strength according to the invention is measured according to standard NEN-EN 17333-4:2020 (EN), ICS91.100.60, under consideration of the further details according to the section "Examples".

The cured foam may have a specific compression strength of ≤ 4.0 kNm/kg or ≤ 3.5 kNm/kg, more preferably ≤ 3.25 kNm/kg or ≤ 3.0 kNm/kg. However, the cured foam may have a specific compression strength of ≥ 4.0 kNm/kg. Specific compression strength is the compression strength divided by the specific weight of the foam. Accordingly, the specific compression strength can be not be too high, what is preferred when filling joints or gaps between constructional parts which may have certain changes of spatial arrangement to each other, including stresses or movements caused by opening and closing doors or windows, different thermal expansions. Especially, the joints may be window or door joints, especially to wooden frames of doors and windows. One the other hand, the density of the foam would not be too low, resulting in good acoustic insulation.

Preferably, the cured foam has a tensile strength of ≥ 100 kPa or of ≥ 105 kPa or of ≥ 110 kPa, without being restricted thereto. A tensile strength also may be up to 150 kPa or up to 180 kPa or up to 200 kPa or up to 250 kPa, without being restricted thereto. The tensile strength according to the invention is measured according to standard NEN-EN 17333-4:2020 (EN), ICS91.100.60, under consideration of the further details according to the section "Examples".

Preferably, the lap shear strength is ≥ 6 MPa or ≥ 6.5 MPa or ≥ 7 MPa, especially when both test substrates being joined by a cured foam forming composition, said composition being the foam forming composition without propellant. The lap shear strength according to the invention is measured according to DIN EN 1465:1995-01, under consideration of the further details according to the section "Examples".

The density of the cured foam of this invention, also for determining the specific compression strength, is evaluated according to NEN-EN 17333-1:2020, method 3 - free foamed density, preferably at 23°C and 50% relative humidity. The density of the cured foam may be less than 150 kg/m³ without being restricted thereto, preferably less than 100 kg/m³ or less than 85 kg/m³, it may be less than 70 kg/m³. The density may be > 20 kg/m³ or > 25 kg/m³ or > 30 kg/m³. These densities especially are preferred when foaming joints in buildings, especially between window and door frames and walls, by filling the joints with the foam.

The shelf life of the foam composition may be ≥ 3 months or ≥ 6 months, preferably ≥ 7,5 months when stored in unopened containers at a temperature of 20°C, preferably at a relative humidity of 50% at 20°C.

A beneficial property of the foamed foam forming composition according to the present invention during its curing is high dimension stability of the curing foam, i.e. low or in fact no substantial shrinkage and low or in fact no substantial expansion during curing.

Further beneficial properties of the foam according to the present invention after curing are:
- low brittleness;
- good thermal insulation;
- good sound insulation;
- good tack free time and good cutting time;
- low water absorption;
- good UV resistance;
- the cured foam is a rigid foam.

In a door slam test with inside doors > 50.000 openings and closings of the door without foam damage is observed. The door especially may be a door of a building. The door slam test was performed according to the method described in Ift Richtlinie MO-04/2 (ift Rosenheim, Germany). A door frame was mounted on an internal wall by 6 slabs of foam adhesive and after cure a 40 kgs internal door was hung in the frame. After 50000 openings and closings with a closing velocity of 0,5 m/s no failure of the foamed connection should have occurred - what is fulfilled by the foam of the present invention.

### Joint

Furthermore, the invention is directed to a joint of a first construction element and a second construction element, wherein the joint between the first and the second construction element at least partially is made by the foam forming composition according to claims 1 to 8 or by the cured foam according to claims 9 to 13, wherein the foam forming composition or the cured foam, respectively, is joining the first construction element and the second construction element. It has been found by the inventors that using a foam forming composition according to the present invention for filling a joint results in a joint having high adhesion between the cured foam to the first and to the second construction element, preferably also resulting in a high compression strength and high tensile strength. This especially is favorable in joining frame like construction elements like door and window frames to walls.

Preferably, the joint comprises a gap between the first and the second constructional element, wherein the gap is at least partially or totally filled with the foam forming composition according to claims 1 to 10 or with the cured foam according to claims 11 to 13. The respective joint shows favorable properties, especially with respect to the adhesion of the foam material to the joining surfaces of the first and the second construction element and therefore has high reliability even under changing stress load, for instance due to stresses from opening and closing doors and windows, vibrations, thermal stress or the like. Furthermore, the gap filled with the foam material, especially cured foam material, show good properties, especially in view of high tensile strength and high compression strength of the cured foam.

Preferably, a joint is given, wherein the first construction element has a wooden material surface and the second construction element has a surface made of a mineral material, wherein the wooden surface and the mineral material surface are joined by the foam prepared by ejection of a foam forming formulation according to one of claims 1 to 10 or are joined with a cured foam according to one of claims 11 to 13. Especially, the cured foam shows a high adhesion with the wooden surface and with the mineral material surface as well, resulting in a joint with high reliability, especially under variation or change of stress load. The mineral material may be a stone material, for instance concrete, sand stone, bricks made of lime stone or other materials without being restricted thereto. However, the foam forming composition or the cured foam according to the present invention can be used to join other materials for instance metal materials of plastic materials.

Furthermore, the cured foam forming formulation without propellant shows good lap shear strength values. According to the present invention, in general, a lap shear strength of the cured foam forming composition without propellant to a given substrate in a lap shear strength test can be taken as a standard for the adhesion of the cured foam to said substrate. Especially, the substrate may be a constructional element.

### Examples

The invention will be further elucidated with reference to embodiments of the present invention and with several comparative examples. The given examples and used additives in the foam forming composition are not restricting the present invention.

The following raw materials are used in the examples:
EB600 is Ebecryl 600, a product of Allnex, and consists of 100% epoxy acrylate (Bisphenol-A-Diglycidylether diacrylate) with equivalent weight of 260 according to the supplier. EB 600 is used as component Aa.

EB3700 is Ebecryl 3700/30 TP, a product of Allnex, and consists of 70% epoxy acrylate (Bisphenol-A-Diglycidylether diacrylate) and 30% TPGDA (tripropyleneglycol diacrylate) with theoretical equivalent weight of 227 based on the values for TPGDA and epoxy acrylate.

SR355 is Sartomer SR-355, a product of Arkema, and consists of di-trimethylolpropane tetraacrylate, with equivalent weight of 121 according to the supplier.

AATMP is Lonzamon AATMP, a product of Arxada, and consists of trimethylolpropane triacetoacetate with a theoretical equivalent weight of 129.

SR9050 is Sartomer SR-9050, a product of Arkema, being a monofunctional adhesion promotor monomer and consists of a phosphate functional acrylate adhesion promoter with an assumed equivalent weight of 350.

TCPP is tris(2-chloroisopropyl) phosphate, produced by many suppliers, such as Bisley International LLC, and used as plasticizer, flame retardant and diluent.

Surfactant is Tegostab B84709 or Tegostab B84714, modified silicone based surfactants of Evonik.

TS720 is CAB-O-SIL TS-720, which is a hydrophobically modified fumed silica rheology agent produced by Cabot.

Graphite is expandable graphite grade ES 100 C10, produced by Graphit Kropfmühl AG, used as flame retardant.

K2CO3 is potassium carbonate 99.5% food grade produced by Altair Chimica, and is used as a catalyst in a 50 wt.-% solution using demi water.

An example for a foam forming composition according to invention is given in the following formulation, which should not restrict the present invention:
MA foam compo-
sition

| | | | g | Wt.-% |
|---|---|---|---|---|
| A comp | Donor 1 | AATMP | 166,1 | 27,7% |
| B comp | Acceptor 1 | SR355 | 94,1 | 15,7% |
| | Acceptor 2 | EB600 | 206,4 | 34,4% |
| | Additive | SR9050 | 6,0 | 1,0% |
| | Surfactant | Tegostab B84714 | 6,8 | 1,1% |
| | Plasticizer | TCPP | 24,0 | 4,0% |
| | Thickener | Cab-O-Sil TS720 | 7,8 | 1,3% |
| | Additive | Graphite ("ES 100 C10") | 60,0 | 10,0% |
| | total A | | 571,2 | 95,2% |
| | | | | |
| | Diluent | Demi water | 14,4 | 2,4% |
| Per can | Catalyst | K2CO3 | 14,4 | 2,4% |
| | total A+B | | 600 | 100% |
| | | | | |
| | | A-comp | 500 | 80,8% |
| | | B-comp | 25,2 | 4,1% |
| | Propellant | isobutane | 56,3 | 9,1% |
| | Propellant | propane | 37,4 | 6,0% |
| | | | | |
| | total can | | 619 | 100% |

The following test methods are used in the following examples and throughout according to the present invention, if not stated otherwise:
Compression strength and Tensile strength tests according to the present invention and to the examples are made according to European standard EN-17333-4 with the following details.

Compression test is performed according to *4.1 Method 1* - *Compression test.* Using a Zwick tensile tester compression strength is measured on foam specimen of 5,0 * 5,0 * 3,0 cm. The foam specimen of 5,0 * 5,0 * 3,0 cm were prepared by filling cavities made from 9,0 * 5,0 * 1,0 cm particle boards and 3,0 * 2,0 * 5,0 cm nonadhesive spacers using screw clamps in non moistured condition. Foams were cured for 7 days in a conditioned room at 23°C and 50% RH and at normal pressure of 1013 hPa. The excess foam is cut off after 7 days and the specimens are tested after removal of spacers. In the tensile tester the specimen is pressed with a velocity of 3 mm/min between the particle boards until 10% compression, thus 3 mm. The measurement starts when a force of 2 N is reached. The maximum stress during the test is taken as the compression strength in kPa (average of three test specimens).

Tensile tests according to the present invention and in the examples is performed by an adjusted version of *4.2 Method 2 - Tensile test.* Foam specimen of 16,0 * 5,0 * 2,0 cm were prepared by filling cavities made between a 20,0 * 5,0 * 1,8 cm particle board and a sand-lime brick (dimensions 21,4 * 10,2 * 5,5 cm) using 2,0 * 2,0 * 5,0 cm nonadhesive spacers and screw clamps in non moistured condition. Foams were cured for 7 days in a conditioned room at 23°C and 50% RH and at normal pressure of 1013 hPa . The excess foam is cut off after 7 days and the specimens are tested after removal of spacers. For the test the brick is fixated by clamps on the bottom of the machine. The particle board is not glued but screwed onto a bigger sized particle board (20,0 * 9,0 * 1,0 cm) just before the measurement. This bigger sized particle board is fixed onto the test grips of the tensile tester. In the tensile tester the specimen is pulled with a velocity of 5 mm/min between the particle board and brick until break. Preload was 5 N. In each measurement the failure mode is noted (cohesive or adhesive with substrate side if applicable). Numbers given are for the maximum tensile strength during the test in kPa (average of three tests).

The foam density is measured according to NEN-EN 17333-1:2020, method 3 - free foamed density, after curing for 7 days at 23°C and 50% relative humidity. This is an immersion method: a weighed piece of foam bead is immersed in a graduated cylinder filled with water and volume change is recorded.

Adhesion to wood of non-foamed foam forming composition without propellant is determined in lap shear strength tests according to the methods described in DIN EN 1465:1995-01, under consideration of the following details. Beech wood specimen of 70 * 20 * 5 mm were pressed to each other after pretreatment and coating with the non-foamed foam forming composition without propellant on one side, respectively. Pretreatment consisted of wiping with acetone and drying at 20°C. Specimens were cured in a press at 3 bars without using a spacer between the wood specimens for one day, wherein the specimens are aligned to each other and are overlapping each other over their entire width of 20 mm, and then stored for another 6 days in a conditioned room at 23°C and 50% RH and at normal pressure of 1013 hPa. Overlap length is measured after curing, wherein the target overlap lenght is 12.5 mm and wherein the specimens overlap in their longitudinal direction, according to DIN EN 1465:1995-01, figures. The overlap surface is calculated as the product of the measured overlap lenghth and the width of the specimen of 20 mm. In the tensile tester the specimen is pulled with a velocity of 50 mm/min. The measurement starts when a force of 0,1 N is reached. The lap shear strength is calculated from the force at break and the overlap surface and is expressed in MPa (average of three tests).

Other properties are determined as described in the general specification above.

Despite the product is developed for 2C application and special two-compartment cans such as described in German utility model DE 29704521 U1 are available, for laboratory tests described according to the invention 250 ml single compartment cans with valves of the NBS type are used. The cans were filled with the formulation after which the lid was closed. The propellant was added through the valve, and directly before spraying, catalyst was also added through the valve using a syringe.

### Example 1 (comparative)

In a 500 ml container 100,4 grams of EB600 was poured. 67,0 grams of SR355 were added and the mixture was hand-mixed with a spatula. Subsequently 101,0 grams of AATMP and 2,9 grams B84709 were added and the blend was hand-mixed after each addition. The resulting mixture showed EqR=1,2 and EAWR=1,5.

A 400 ml container was loaded with 45 grams of this mixture and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 7,5 MPa.

250 ml single compartment spray cans were loaded with 80,0 grams of this mixture. Next the lid was closed and 15,0 grams of isobutane gas was introduced through the valve. The contents was homogenized well by hand-shaking. The mixture was activated by adding 4,0 grams of K2CO3 catalyst through the valve using a syringe and hand-shaking for 15 seconds. Immediately afterwards the can was sprayed out using a straw of the high-yield type for filling test joints and preparation of beads. Compression strength was 93 kPa, specific compression strength 2,5 kNm/kg and tensile strength was 94 kPa, thereby providing adhesive foam that performed below target.

### Example 2 (comparative)

In a 500 ml container 141,4 grams of SR355 was poured. 125,8 grams of AATMP were added and the mixture was hand-mixed with a spatula. Subsequently 3,0 grams of SR9050, 12,0 grams of TCPP and 3,4 grams B84709 were added and the blend was hand-mixed after each addition. The resulting mixture showed EqR=1,2 and EAWR=0.

A 400 ml container was loaded with 45 grams of this mixture and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 3,2 MPa.

250 ml single compartment spray cans were loaded with 80,0 grams of this mixture. Next the lid was closed and 15,0 grams of isobutane gas was introduced through the valve. The contents was homogenized well by hand-shaking. The mixture was activated by adding 4,0 grams of K2CO3 catalyst through the valve using a syringe and hand-shaking for 15 seconds. Immediately afterwards the can was sprayed out using a straw of the high-yield type for filling test joints and preparation of beads. The foam was not stable: it collapsed and flowed out of the measuring joints.

### Example 3 (comparative)

In a 400 ml container 70,7 grams EB600; 78,9 grams SR355; 99,8 grams AATMP; 2,8 grams SR9050; 11,2 grams TCPP and 3,2 grams B84709 are combined using the procedure of example 1 to yield a blend with EqR=1,2 and EAWR=0,9.

A 400 ml container was loaded with 45 grams of this mixture and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 5,4 MPa.

80 grams of this mixture were combined with 15 grams of iso-butane gas in a spray can, which was applied with 4,0 grams of K2CO3 catalyst in procedures similar to those of example 1. Compression strength was 43 kPa and tensile strength was 67 kPa, thereby providing adhesive foam that performed below target.

### Example 4 (comparative)

In a 400 ml container 92,7 grams EB600; 65,7 grams SR355; 95,0 grams AATMP; 2,7 grams SR9050; 11,2 grams TCPP and 3,2 grams B84709 are combined using the procedure of example 1 to yield a blend with EqR=1,2 and EAWR=1,4.

80 grams of this blend were combined with 15 grams of isobutane gas in a spray can, which was applicated with 4,0 grams of K2CO3 catalyst in procedures similar to those of example 1. Compression strength was 57 kPa, specific compression strength 2,0 kNm/kg and tensile strength was 99 kPa, thereby providing adhesive foam that performed somewhat below target.

### Example 5 (inventive)

In a 400 ml container 100,3 grams EB600; 56,7 grams SR355; 92,4 grams AATMP; 2,8 grams SR9050; 11,2 grams TCPP and 3,2 grams B84709 are combined using the procedure of example 1 to yield a blend with EqR=1,2 and EAWR=1,7.

A 400 ml container was loaded with 45 grams of this mixture and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 7,1 MPa.

80 grams of this blend were combined with 15 grams of isobutane gas in a spray can, which was applied with 4,0 grams of K2CO3 catalyst in procedures similar to those of example 1. Compression strength was 83 kPa, specific compression strength 2,3 kNm/kg and tensile strength was 108 kPa, thereby providing adhesive foam that performed above target.

### Example 6 (inventive)

In a 400 ml container 107,7 grams EB600; 51,2 grams SR355; 90,4 grams AATMP; 2,8 grams SR9050; 11,2 grams TCPP and 3,2 grams B84709 are combined using the procedure of example 1 to yield a blend with EqR=1,2 and EAWR=2,0.

A 400 ml container was loaded with 45 grams of this blend and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 7,7 MPa.

80 grams of this blend were combined with 15 grams of isobutane gas in a spray can, which was applied with 4,0 grams of K2CO3 catalyst in procedures similar to those of example 1. Compression strength was 84 kPa and tensile strength was 142 kPa, thereby providing adhesive foam that performed well above target.

### Example 7 (inventive)

In a 400 ml container 117,8 grams EB600; 43,8 grams SR355; 87,7 grams AATMP; 2,8 grams SR9050; 11,2 grams TCPP and 3,2 grams B84709 are combined using the procedure of example 1 to yield a blend with EqR=1,2 and EAWR=2,5.

A 400 ml container was loaded with 45 grams of this blend and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 7,3 MPa.

80 grams of this blend were combined with 15 grams of isobutane gas in a spray can, which was applied with 4,0 grams of K2CO3 catalyst in procedures similar to those of example 1. Compression strength was 117 kPa, specific compression 2,7 kNm/kg and tensile strength was 128 kPa, thereby providing adhesive foam that performed well above target.

### Example 8 (inventive)

In a 400 ml container 132,8 grams EB600; 35,0 grams SR355; 86,2 grams AATMP; 2,8 grams SR9050; 11,4 grams TCPP and 3,2 grams B84709 are combined using the procedure of example 1 to yield a blend with EqR=1,2 and EAWR=3,5.

A 400 ml container was loaded with 45 grams of this blend and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 6,7 MPa.

80 grams of this blend were combined with 15 grams of isobutane gas in a spray can, which was applied with 4,0 grams of K2CO3 catalyst in procedures similar to those of example 1. Compression strength was 44 kPa, specific compression 1,4 kNm/kg and tensile strength was 109 kPa, thereby providing adhesive foam that performed above target.

### Example 9 (comparative)

In a 400 ml container 83,9 grams EB600; 93,8 grams SR355; 71,5 grams AATMP; 2,8 grams SR9050; 11,2 grams TCPP and 3,2 grams B84709 are combined using the procedure of example 1 to yield a blend with EqR=2,0 and EAWR=0,9.

A 400 ml container was loaded with 45 grams of this blend and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 6,6 MPa.

80 grams of this blend were combined with 15 grams of isobutane gas in a spray can, which was applicated with 4,0 grams of K2CO3 catalyst in procedures similar to those of example 1. Compression strength was 82 kPa, specific compression strength 2,4 kNm/kg and tensile strength was 90 kPa, thereby providing adhesive foam that performed below target.

### Example 10 (inventive)

In a 400 ml container 125,6 grams EB600; 60,1 grams SR355; 63,7 grams AATMP; 2,8 grams SR9050; 11,2 grams TCPP and 3,1 grams B84709 are combined using the procedure of example 1 to yield a blend with EqR=2,0 and EAWR=2,0.

A 400 ml container was loaded with 45 grams of this blend and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 6,9 MPa.

80 grams of this blend were combined with 15 grams of isobutane gas in a spray can, which was applicated with 4,0 grams of K2CO3 catalyst in procedures similar to those of example 1. Compression strength was 85 kPa, specific compression strength 2,3 kNm/kg and tensile strength was 136 kPa, thereby providing adhesive foam that performed well above target.

### Example 11 (inventive)

In a 500 ml container 274,7 grams EB3700; 81,8 grams AATMP; 4,0 grams SR9050; 16,0 grams TCPP and 4,6 grams B84709 are combined using the procedure of example 1 to yield a blend with EqR=1,9 and EAWR=2,3.

A 400 ml container was loaded with 45 grams of this blend and 2,3 grams of K2CO3 catalyst was added. Directly after intensive hand-mixing for 30 seconds, the material was applied on beech specimen and placed in a press at 3 bars pressure. Lap shear strength was tested after curing for one day in the press and 6 days outside the press and was 7,6 MPa.

80 grams of this blend were combined with 15 grams of isobutane gas in a spray can, which was applicated with 4,0 grams of K2CO3 catalyst in procedures similar to those of example 1. Compression strength was 65 kPa, specific compression strength 1,8 kNm/kg and tensile strength was 106 kPa, thereby providing adhesive foam that performed above target.

### Example 12 (comparative)

In a 400 ml container 85,1 grams of EB600 were poured. 60,3 grams of SR355 were added and the mixture was hand-mixed with a spatula. Subsequently 87,2 grams of AATMP, 2,8 grams of SR9050, 11,2 grams of TCPP and 3,2 grams B84709 were added and the blend was hand-mixed after each addition. The container was placed under a mechanical overhead stirrer with a dissolver type blade and mixed well. Next 16,8 grams Graphite were dosed under (slow) stirring. Finally homogenization was performed by stirring at up to 1000 rpm.

This yielded a blend with EqR=1,2 and EAWR=1,3.

80 grams of this blend were combined with 15 grams of isobutane gas in a spray can, which was applicated with 4,0 grams of K2CO3 catalyst in procedures similar to those of example 1. Compression strength was 46 kPa and tensile strength was 69 kPa, thereby providing adhesive foam that performed below target.

### Example 13 (inventive)

In a 400 ml container 102,9 grams EB600; 46,9 grams SR355; 82,8 grams AATMP; 2,8 grams SR9050; 11,2 grams TCPP; 3,2 grams B84709 and 16,8 grams of Graphite are combined using the procedures of example 13 to yield a blend with EqR=1,2 and EAWR=2,1. 80 grams of this blend were combined with 15 grams of isobutane gas in a spray can, which was applicated with 4,0 grams of K2CO3 catalyst in procedures similar to those of example 1. Compression strength was 59 kPa and tensile strength was 120 kPa, thereby providing adhesive foam that performed above target.

### Example 14 (inventive)

In a 400 ml container 96,3 grams of EB600 was poured. 43,9 grams of SR355 were added and the mixture was hand-mixed with a spatula. Subsequently 77,5 grams of AATMP, 2,8 grams of SR9050, 11,2 grams of TCPP and 3,2 grams B84709 were added and the blend was hand-mixed after each addition. The container was placed under a mechanical overhead stirrer with a dissolver type blade and mixed well. Next 28,0 grams Graphite and 3,6 grams of TS720 were dosed under (slow) stirring. Finally homogenization was performed by stirring at up to 1000 rpm. This yielded a blend with EqR=1,2 and EAWR=2,1.

80 grams of this blend were combined with 15 grams of isobutane gas in a spray can, which was applicated with 4,0 grams of K2CO3 catalyst in procedures similar to those of example 1. Compression strength was 84 kPa, specific compression strength 2,5 kNm/kg and tensile strength was 141 kPa, thereby providing adhesive foam that performed well above target.

### Example 15 (inventive)

In a 400 ml container 96,3 grams EB600; 43,9 grams SR355; 77,5 grams AATMP; 2,8 grams SR9050; 11,2 grams TCPP; 3,2 grams B84714; 28,0 grams of Graphite and 3,6 grams of TS720 were combined using the procedures of example 15 to yield a blend with EqR=1,2 and EAWR=2,1.

80 grams of this blend were combined with 15 grams of isobutane gas in a spray can, which was applicated with 4,0 grams of K2CO3 catalyst in procedures similar to those of example 1. Compression strength was 96 kPa, specific compression strength was 2,3 kNm/kg and tensile strength was 136 kPa, thereby providing adhesive foam that performed well above target.

### Example 16 (inventive)

In a 400 ml container 111,4 grams EB600; 51,1 grams SR355; 55,3 grams AATMP; 2,8 grams SR9050; 11,2 grams TCPP; 3,2 grams B84709; 28,0 grams of Graphite and 3,6 grams of TS720 were combined using the procedures of example 15 to yield a blend with EqR=2,0 and EAWR=2,1.

80 grams of this blend were combined with 15 grams of isobutane gas in a spray can, which was applicated with 4,0 grams of K2CO3 catalyst in procedures similar to those of example 1. Compression strength was 107 kPa, specific compression strength 2,6 kNm/kg and tensile strength was 169 kPa, thereby providing adhesive foam that performed well above target.

| Exam ple | Surfa ctant | Grap hite | Sil ica | EqR | EAWR | Dens ity | LSS beech | Comp | Spec comp | Tens |
|---|---|---|---|---|---|---|---|---|---|---|
| | type | % | % | - | - | g/l | MPa | kPa | kNm/kg | kPa |
| 1 | 84709 | 0 | 0 | 1,2 | 1,5 | 37,7 | 7,5 | 93 | 2,5 | 94 |
| 2 | 84709 | 0 | 0 | 1,2 | 0,0 | | 3,2 | - | | - |
| 3 | 84709 | 0 | 0 | 1,2 | 0,9 | | 5,4 | 43 | | 67 |
| 4 | 84709 | 0 | 0 | 1,2 | 1,4 | 27, 9 | | 57 | 2,0 | 99 |
| 5 | 84709 | 0 | 0 | 1,2 | 1,7 | 36,2 | 7,1 | 83 | 2,3 | 108 |
| 6 | 84709 | 0 | 0 | 1,2 | 2,0 | | 7,7 | 84 | | 142 |
| 7 | 84709 | 0 | 0 | 1,2 | 2,5 | 43,3 | 7,3 | 117 | 2,7 | 128 |
| 8 | 84709 | 0 | 0 | 1,2 | 3,5 | 32,2 | 6,7 | 44 | 1,4 | 109 |
| 9 | 84709 | 0 | 0 | 2,0 | 0,9 | 33,6 | 6,6 | 82 | 2,4 | 90 |
| 10 | 84709 | 0 | 0 | 2,0 | 2,0 | 36,8 | 6,9 | 85 | 2,3 | 136 |
| 11 | 84709 | 0 | 0 | 1,9 | 2,3 | 35,8 | 7,6 | 65 | 1,8 | 106 |
| 12 | 84709 | 6 | 0 | 1,2 | 1,3 | | | 46 | | 69 |
| 13 | 84709 | 6 | 0 | 1,2 | 2,1 | | | 59 | | 120 |
| 14 | 84709 | 10 | 1,3 | 1,2 | 2,1 | 33,7 | | 84 | 2,5 | 141 |
| 15 | 84714 | 10 | 1,3 | 1,2 | 2,1 | 41,8 | | 96 | 2,3 | 136 |
| 16 | 84709 | 10 | 1,3 | 2,0 | 2,1 | 41,4 | | 107 | 2,6 | 169 |

| | | | | | | | | | | |
|---|---|---|---|---|---|---|---|---|---|---|
| LSS: lap shear strength; Comp: compression strength; Spec comp: specific compression strength; tens: tensile strength | | | | | | | | | | |

### Conclusion

In comparative example 1a foam is obtained having good compression but sub-optimal tensile strength.

With examples 2 to 7 it is shown that in foam formulations lap shear strength and compression strength are related to epoxy acrylate content (EAWR). Also tensile strength is related to EAWR, values above 100 are only found for EAWR = 1.7 or higher.

Examples 9, 10 and 16 show that tensile strength is improved by higher EqR but not enough to reach a voluntary (not binding) target (>100) if EAWR is too low. Thus high EAWR is shown to be a better tool than high EqR to formulate to tensile strength in target.

Examples 11 and 15 show that commercially available epoxy acrylates or surfactants can be replaced by other types, while still obtaining satisfying results.

Examples 13, 14 and 15 show that good compression and tensile properties remain when in the foam forming composition fire retardant like expandable graphite and/or rheological agents like silica are present. The properties of the cured foams are favorable over example 12 with lower EAWR value.

## Claims

1. A foam forming composition comprising a part A and a part B, a catalyst and a propellant,
the part A consisting of one or more multifunctional acrylate compounds as a Michael acceptor,
wherein the part A consists of
(i) part Aa being one or more epoxy acrylates having multiple functional acrylate groups, and
(ii) part Ab being one or more acrylates different from part Aa and having multiple functional acrylate groups,
the part B consists of one or more multifunctional Michael donor compounds,
the foam forming composition comprising a catalyst for reacting part A and part B with one another in a Michael addition reaction,
wherein the weight ratio EAWR of the part Aa to part Ab is ≥ 1.65.

2. A composition according to claim 1, wherein the weight ratio EAWR of part Aa to part Ab is ≥ 1.7 or is ≥ 1.8.

3. Composition according to one of claims 1 or 2, wherein the molar ratio EqR of functional Michael addition reactive acrylate groups of part A to functional Michael addition reactive donor groups of part B is ≥ 0.8 and/or is ≤ 2.5, especially is ≥ 0.9 and/or ≤ 2.0.

4. Composition according to one of claims 1 to 3, wherein part Aa comprises or consist of multifunctional acrylic esters of aromatic or of aliphatic or of cycloaliphatic epoxy compounds, or mixtures thereof, wherein the epoxy group is esterified with an acrylic acid.

5. Composition according to one of claims 1 to 4, wherein part Aa comprises or consist of acrylate esters of bisphenol epoxy resins.

6. Composition according to one of claims 1 to 5, wherein part B is consisting of one or more multifunctional acetoacetates and/or multifunctional malonates and/or multifunctional cyanoacetates and/or multifunctional acetoacetamides, or mixtures thereof, preferably is consisting of one or more multifunctional acetoacetates and/or of one or more multifunctional malonates.

7. Composition according to one of claims 1 to 6, wherein the compounds of part A and the compounds of part B in combination are present to ≥ 30 wt-% in the composition, preferably to ≥ 50 wt-%, more preferably to ≥ 60 wt-%.

8. Composition according to one of claims 1 to 7, wherein the compounds of part A and B are in a first compartment CA and the catalyst is present in a second compartment CB, being different from compartment CA.

9. Composition according to one of claims 1 to 8, wherein the propellant is present in the composition to ≥ 3 wt-% and/or ≤ 35 wt-%.

10. Composition according to one of claims 1 to 9, wherein the cured foam forming composition without propellant has in a lap shear strength test between two wooden specimens a lap shear strength of ≥ 7 MPa according to DIN EN 1465:1995-01.

11. A foam being made by expansion and curing of a foam forming composition of one of claims 1 to 10, including reaction of compounds of parts A and B in the curing.

12. A foam according to claim 11, having maximum compression strength of ≥ 40 kPa according to EN 17333-4:2020(E), section 4.1, method 1.

13. A foam according to one of claims 11 to 12, wherein the foam has a tensile strength of ≥ 100 kPa according to an adjusted version of EN 17333-4:2020(E), section 4.2, method 2.

14. Joint of a first construction element and of a second construction element, wherein the joint between the first and the second construction element is at least partially or totally made by the foam forming composition of one of claims 1 to 10 or by a foam according to one of claims 11 to 13.

15. Joint according to claim 14, wherein the joint comprises a gap between the first and the second element and wherein the gap is at least partially or totally filled by the foam forming composition of claims 1 to 10 or by the foam according to one of claims 11 to 13.

16. Joint according to claim 14 or 15, wherein the first construction element has a wooden material surface and wherein the wooden material surface of the first construction element is joined to the second construction element by the foam forming composition of one of claims 1 to 10 or by the foam according to one of claims 11 to 13.
